# EUROPEAN PATENT SPECIFICATION

(11) **EP 2 244 439 B1**
(45) Date of publication and mention of the grant of the patent: **12.10.2016**
(21) Application number: 10160654.9
(22) Date of filing: 22.04.2010
(51) Int. Cl.: H04L 29/08, H04L 29/06, G06F 17/30

(54) **RELAY SERVER, CONTENT DISTRIBUTION SYSTEM AND CONTENT DISTRIBUTION METHOD**
Relaisserver, Inhaltsverteilungssystem und Inhaltsverteilungsverfahren
Serveur de relais, système de distribution de contenu et procédé de distribution de contenu

(30) Priority: 24.04.2009 JP 2009105940
(43) Date of publication of application: 27.10.2010
(73) Proprietor: NTT DOCOMO, INC., Chiyoda-ku Tokyo 100-6150 (JP)
(72) Inventor: Yamaguchi, Junichi, Tokyo 100-6150 (JP)
(74) Representative: Schwabe - Sandmair - Marx

(56) References cited:
- EP-A1- 1 263 205
- WO-A2-2004/021218
- JP-A- 2002 342 218
- US-A- 6 138 156
- US-A1- 2004 011 190
- US-A1- 2007 121 651
- US-A1- 2008 162 403

## Description

This application is based on the Japanese Patent Application No. 2009-105940 filed on April 24, 2009, the entire content of which is expressly incorporated by reference herein.

### BACKGROUND OF THE INVENTION

### 1. Field of the invention

The present invention relates to a relay server, content distribution system and content distribution method for distributing contents to user terminals.

### 2. Description of the Prior Art

Conventionally, content distribution systems have been known in which a user selects optimal content in accordance with a charging form of the user terminal, and thereby optimizes the content distributed to the user terminal from a content provider (for example, Japanese Patent Publication No. 2007-129472).

In the content distribution systems, when the charging form of the user terminal is a flat-rate system in which a fixed fee is charged irrespective of communication data amounts, the user selects content with high added value such as high resolution and moving images. Meanwhile, when the charging form of the user terminal is a non-flat-rate system in which a fee is charged in accordance with communication data amounts, the user selects content with low added value such as low resolution and still images. The content provider distributes the content selected by the user to the user terminal. In such a content distribution system, the user needs to recognize the charging form of the user and select the content corresponding to the recognized charging form, and therefore, the processing load increases on the user terminal side.

Then, in the above-mentioned content distribution system, in order to reduce the processing load on the user terminal side, it is considered that the content to distribute to the user terminal is optimized in accordance with the charging form of the user terminal on the content server side for providing the content.

However, when the content is optimized on the content server side, the content server needs to acquire the charging form of the user terminal and select the content corresponding to the charging form of the user terminal, and therefore, the processing load increases on the content server side.

US 6 138 156 A discloses a content transformer between the content server and the subscriber terminal to which content is provided whereby content is adapted to the subscriber's profile.

Such problems are not limited to the case of distributing the content corresponding to the charging form of the user terminal, and schemes for optimizing contents distributed to user terminals have been desired without increasing not only the processing load on the user terminal side but also the processing load on the content server side.

### SUMMARY OF THE INVENTION

The present invention was made in view of the respects, and it is an object of the invention to provide a relay server, as claimed in claim 1 content distribution system as claimed in claim 6, and content distribution method as claimed in claim 7 enabling content distributed to a user terminal to be optimized on the network side in accordance with various conditions on the user terminal side without increasing the processing load on the content server side.

An object of the invention is a relay server as claimed in claim 1. Another object of the invention is a system as claimed in claim 6. A further object of the invention is a method as claimed in claim 7. Preferred embodiments are covered by the appended dependent claims.

### BRIEF DESCRIPTION OF THE DRAWINGS

The various features of novelty which characterize the invention are pointed out with particularity in the claims attached to and forming a part of this specification. For a better understanding of the invention, its operating advantages, and specific objects attained by its use, reference should be had to the accompanying drawing and descriptive matter in which there is illustrated and described a preferred embodiment of the invention.
FIG. 1 is a schematic diagram of a content distribution system according to Embodiment 1 of the invention;
FIG. 2 is a configuration diagram of a gateway server according to Embodiment 1 of the invention;
FIG. 3 contains views to explain (a) content in the editable form according to Embodiment 1 of the invention, (b) content for a flat-rate system according to Embodiment 1 of the invention, and (C) content for a non-flat-rate system according to Embodiment 1 of the invention;
FIG. 4 is a sequence diagram illustrating a content distribution method according to Embodiment 1 of the invention;
FIG. 5 is a flowchart illustrating the operation of the gateway server according to Embodiment 1 of the invention; and
FIG. 6 contains views to explain (a) content in the editable form according to Embodiment 2 of the invention, (b) content for a flat-rate system according to Embodiment 2 of the invention, and (C) content for a non-flat-rate system according to Embodiment 2 of the invention.

### DESCRIPTION OF THE PREFERRED EMBODIMENTS

Embodiments of the invention will specifically be described below with reference to accompanying drawings.

### [Embodiment 1]

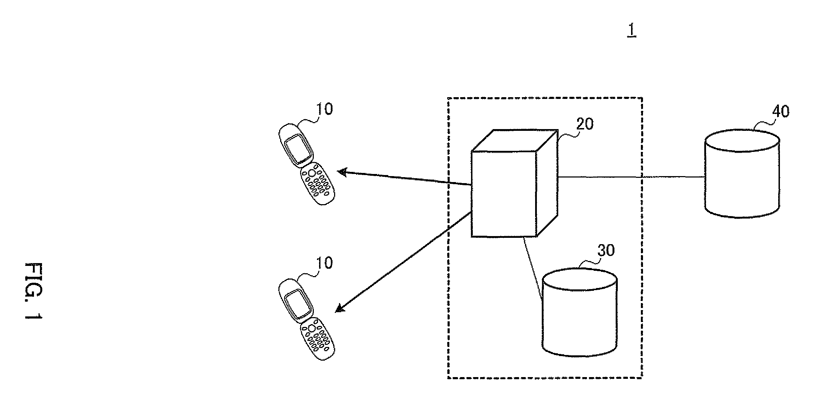

FIG. 1 is a schematic diagram of a content distribution system according to Embodiments of the invention. As shown in FIG. 1, the content distribution system 1 includes user terminals 10, gateway server 20, client managing system 30 and content server 40.

For example, the user terminals 10 are mobile terminals, and connected to the gateway server 20 via a base station and the like (not shown in the figure). The gateway server 20 (relay server) is a server of a telecommunications carrier that relays communications between the user terminals 10 and content server 40. The client managing system 30 is a system that manages user attributes (for example, charging form, user' s age, etc.) of the user terminals 10 subscribing to the telecommunications carrier, and is connected to the gateway server 20. Further, the client managing system 30 is accessible from the gateway server 20 managed by the telecommunications carrier, but is not accessible from the content server 40 that is not managed by the telecommunications carrier. The content server 40 is a server that distributes contents to the user terminals 10 via the gateway server 20.

In such a content distribution system 1, the gateway server 20 (relay server) acquires editable content from the content server 40, edits the editable content acquired from the gateway server based on a predetermined editing condition, and distributes the edited content to the user terminal 10. Accordingly, in the content distribution system 1, it is possible to optimize the content distributed to the user terminal 10 on the network side in accordance with various conditions on the user terminal 10 side without increasing the processing load on the content server side.

Embodiment 1 describes an example that in the content distribution system 1, the gateway server 20 edits the content to distribute to the user terminal 10 based on whether the charging form of the user terminal 10 is a flat-rate system or non-flat-rate system.

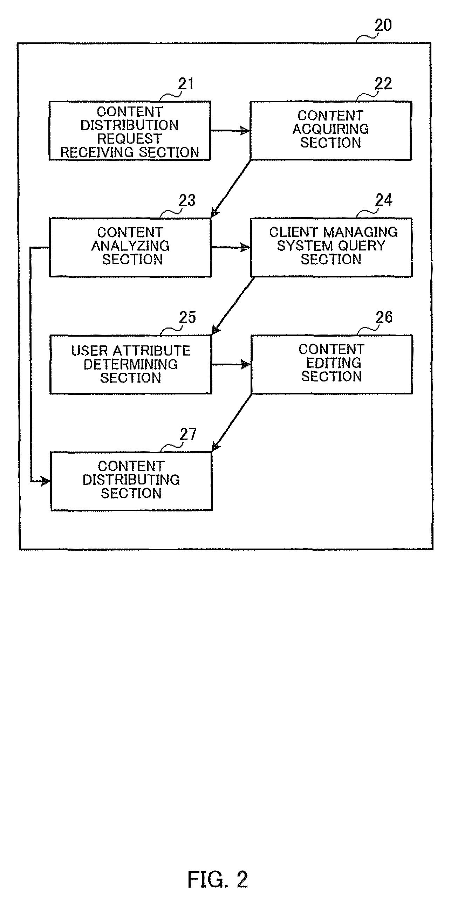

FIG. 2 is a configuration diagram of the gateway server 20 according to Embodiment 1 of the invention. As shown in FIG. 2, the gateway server 20 includes a content distribution request receiving section 21, content acquiring section 22, content analyzing section 23, client managing system query section 24, user attribute determining section 25, content editing section 26 (content distributing section), and content distributing section 27 (content distributing section).

The content distribution request receiving section 21 receives a content distribution request and identification information (for example, the telephone number or subscription number) of the user terminal 10 from the user terminal 10. Herein, the content distribution request is to request the content server 40 to distribute the content, and includes the identification information (for example, URL: Uniform Resource Location) of the content server 40 and content. Further, the content distribution request receiving section 21 transfers the content distribution request received from the user terminal 10 to the content server 40.

The content acquiring section 22 acquires the content that is distributed from the content server 40 in accordance with the above-mentioned content distribution request.

The content analyzing section 23 analyzes whether the content acquired by the content acquiring section 22 is content in the editable form. When the analysis result shows the content in the editable form, the content analyzing section 23 notifies the client managing system query section 24 of the analysis result, while notifying the content distributing section 27 of the analysis result when the analysis result does not show the content in the editable form.

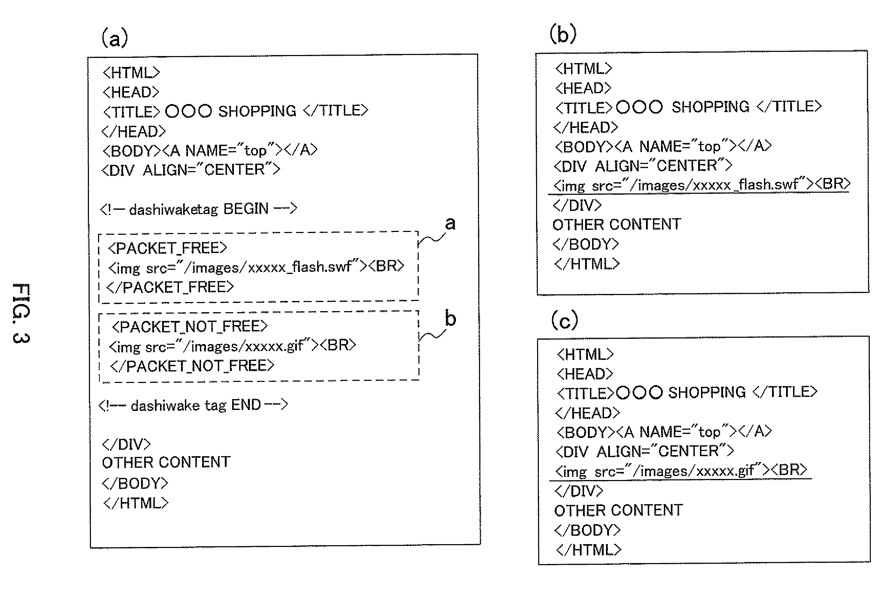

Herein, the content in the editable form is an HTML file including a tag area to edit the content. More specifically, as shown in FIG. 3(a), the content to be edited into the content for the flat-rate system and the content for the non-flat-rate system includes a tag "a" to distribute the content for the flat-rate system and a tag "b" to distribute the content for the non-flat-rate system.

In the tag "a", moving image content (img src="/images/xxxxx_flash.swf") is designated as the content for the flat-rate system. In addition, as the content for the flat-rate system, as well as the moving image content, content with high capacity such as high-resolution content may be designated.

Meanwhile, in the tag "b", still image content (img src="/images/xxxxx.gif") is designated as the content for the non-flat-rate system. In addition, as the content for the non-flat-rate system, as well as the still image content, content with low capacity such as low-resolution content may be designated.

When the analysis result in the content analyzing section 23 shows the content in the editable form, the client managing system query section 24 refers to the client managing system 30 for the charging form of the user terminal 10 using, as a key, the identification information of the user terminal 10 included in the content distribution request from the user terminal 10. In addition, the client managing system query section 24 may acquire the charging form of the user terminal 10 from the contract information stored in a storing section (not shown in the figure) inside the gateway server 20 without referring to the client managing system 30.

The user attribute determining section 25 determines whether the charging form of the user terminal 10 acquired in the client managing system query section 24 is the flat-rate system or the non-flat-rate system. When the charging form of the user terminal 10 is the flat-rate system, the user attribute determining section 25 determines to distribute the content for the flat-rate system, while determining to distribute the content for the non-flat-rate system, when the charging form of the user terminal 10 is the non-flat-rate system.

The content editing section 26 edits the editable content acquired from the content server 40 according to the determination result by the user attribute determining section 25.

More specifically, when the user attribute determining section 25 determines to distribute the content for the flat-rate system, as shown in FIG. 3(b), the content editing section 26 edits the HTML file so as to distribute the flat-rate content (img src="/images/xxxxx_flash.swf") designated by the tag "a" for the flat-rate system. Meanwhile, when the user attribute determining section 25 determines to distribute the content for the non-flat-rate system, as shown in FIG. 3(c), the content editing section 26 edits the HTML file so as to distribute the non-flat-rate content (img src="/images/xxxxx.gif") designated by the tag "b" for the non-flat-rate system.

The content distributing section 27 distributes the content edited by the content editing section 26 to the user terminal 10. Further, when the analysis result in the content analyzing section 23 does not show the content in the editable form, the content distributing section 27 distributes the content acquired from the content server 40 to the user terminal 10 without any editing.

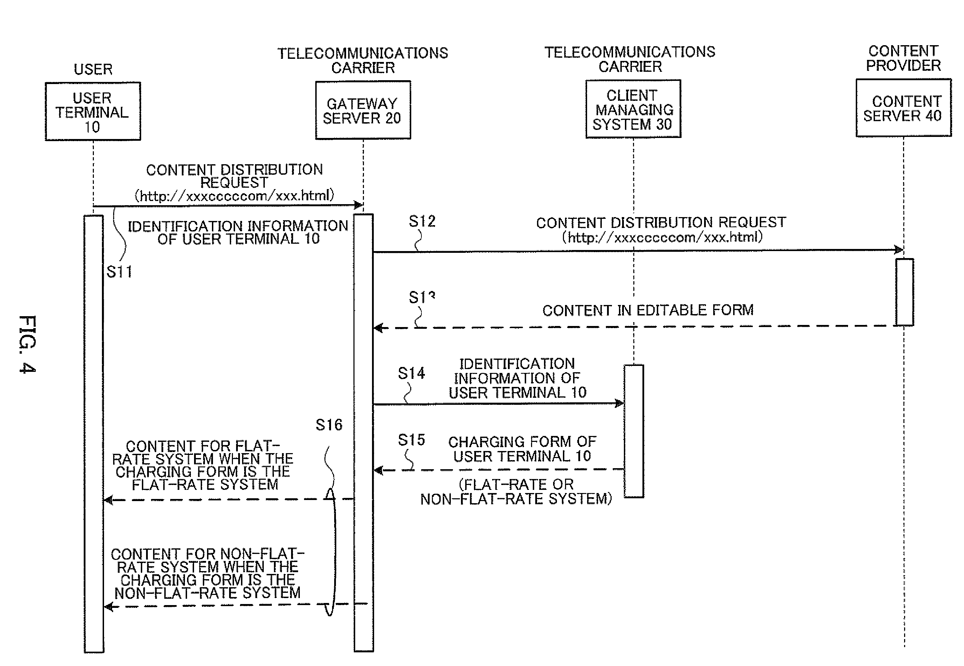

Described next is a content distribution method in the content distribution system 1 according to Embodiment 1 that is configured as described above. FIG. 4 is a sequence diagram illustrating the content distribution method according to Embodiment 1 of the invention.

As shown in FIG. 4, the user terminal 10 transmits a content distribution request for the content server 40 and the identification information of the user terminal 10 to the gateway server 20 (step S11).

The gateway server 20 transfers the content distribution request received from the user terminal 10 to the content server 40 (step S12).

The content server 40 transmits the content designated in the content distribution request to the gateway server 20 (step S13). In addition, the content server 40 is capable of transmitting the content in the editable form and content in the non-editable form to the gateway server 20, and herein, is assumed to transmit the content in the editable form.

The gateway server 20 refers to the client managing system 30 for the charging form of the user terminal 10, using as a key the identification information of the user terminal 10 included in the content distribution request received in step S11 (step S14).

The client managing system 30 transmits a query result of the charging form of the user terminal 10 (step S15).

The gateway server 20 distributes the content for the flat-rate system to the user terminal 10 when the charging form of the user terminal 10 is the flat-rate system, while distributing the content for the non-flat-rate system to the user terminal 10 when the charging form of the user terminal 10 is the non-flat-rate system (step S16).

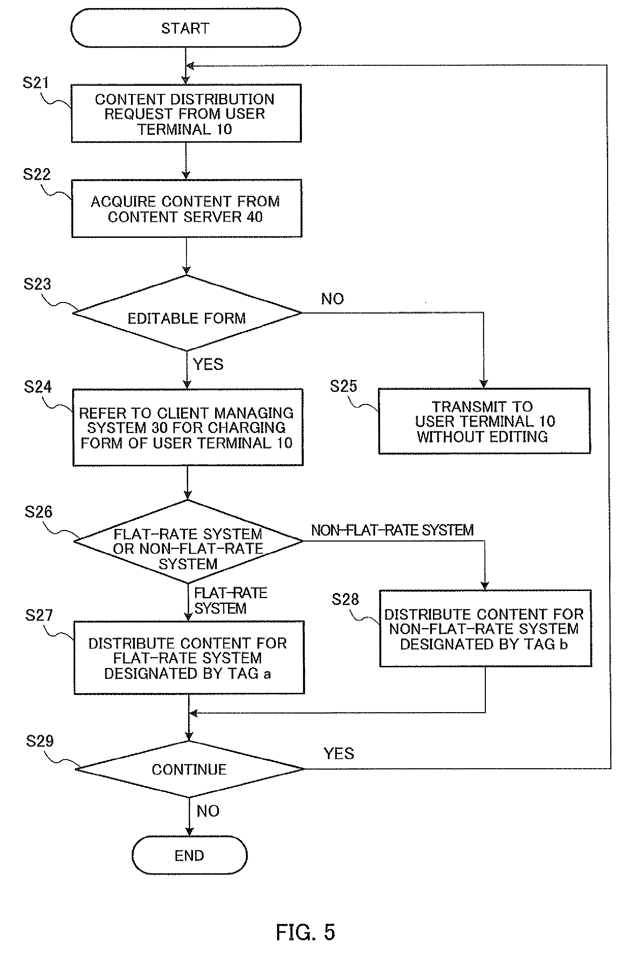

The content distribution method according to Embodiment 1 of the invention will specifically be described below while focusing on the operation of the gateway server 20. FIG. 5 is a flowchart illustrating the operation of the gateway server 20 according to Embodiment 1 of the invention.

As shown in FIG. 5, the content distribution request receiving section 21 receives a content distribution request for the content server 40 and the identification information of the user terminal 10 from the user terminal 10. The content distribution request receiving section 21 transfers the received content distribution request to the content server 40 (step S21).

The content acquiring section 22 acquires the content that is distributed from the content server 40 in accordance with the content distribution request in step S21 (step S22).

The content analyzing section 23 analyzes whether the content acquired in step S22 is in the editable form (step S23). More specifically, the content analyzing section 23 determines whether the content acquired in step S22 includes the tag "a" for the flat-rate system and tag "b" for the non-flat-rate system. When the content acquired in step S22 is the content in the editable form, the processing flow proceeds to step S24.

When the content acquired in step S22 is not the content in the editable form, the content distributing section 27 distributes the content acquired in step S22 to the user terminal 10 without any editing (step S25).

Meanwhile, when the content acquired in step S22 is the content in the editable form, the client managing system query section 24 refers to the client managing system 30 for the charging form of the user terminal 10, using as a key the identification information of the user terminal 10 received in step S21 (step S24).

The user attribute determining section 25 determines whether the charging form of the user terminal 10 referred in step S24 is the flat-rate system or the non-flat-rate system (step S26).

When the charging form of the user terminal 10 is the flat-rate system, the content editing section 26 edits the content acquired in step S22 so as to distribute the flat-rate content designated by the tag "a". The content distributing section 27 transmits the edited content to the user terminal 10 (step S27).

When the charging form of the user terminal 10 is the non-flat-rate system, the content editing section 26 edits the content acquired in step S22 so as to distribute the non-flat-rate content designated by the tag "b". The content distributing section 27 transmits the edited content to the user terminal 10 (step S28).

According to the content distribution system 1 according to [Embodiment 1, the gateway server 20 edits content acquired from the content server 40 based on whether the charging form of the user terminal 10 is the flat-rate system or non-flat-rate system, and distributes the edited content to the user terminal 10. Therefore, it is possible to optimize the content to be distributed to the user terminal 10 on the network side in accordance with the charging form of the user terminal 10 without increasing the processing load on the content server 40 side. Further, the content server 40 is capable of distributing high-value added content with high capacity irrespective of whether or not the charging form of the user terminal 10 is the non-flat-rate system, and the gateway server 20 is capable of distributing high-value added content with high capacity to the user terminal 10, when the charging form of the user terminal 10 is the flat-rate system.

Moreover, according to the content distribution system 1 according to Embodiment 1, the gateway server 20 managed by the telecommunications carrier that is subscribed to by the user terminal 10 edits the content acquired from the content server 40 and distributes the edited content to the user terminal 10. Therefore, it is possible to distribute the optimal content under the initiative of the network side without the outside content provider who manages the content server 40 knowing the charging form involving the privacy of the user terminal 10.

### [Embodiment 2]

Next, Embodiment 2 describes an example where in the content distribution system 1, the gateway server 20 edits the content to distribute to the user terminal 10 based on whether or not the user's age of the user terminal 10 is a predetermined age or more, while focusing on the difference from the gateway server 20 in Embodiment 1.

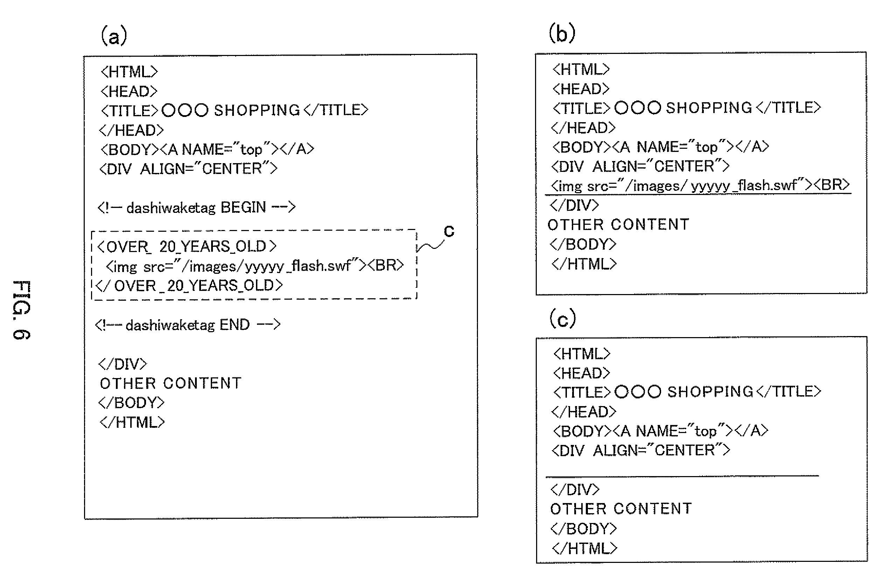

The content acquiring section 22 according to Embodiment 2 acquires content to be edited into content that includes information for a predetermined age targeted for a user of the predetermined age or more and content that does not include the information for the predetermined age. More specifically, as shown in FIG. 6(a), the content in the editable form according to Embodiment 2 includes a tag "c" to distribute the information for the predetermined age.

The client managing system query section 24 according to Embodiment 2 refers to the client managing system 30 for the user's age of the user terminal 10, instead of the charging form of the user terminal 10, using the identification information of the user terminal 10 as a key. The user attribute determining section 25 determines whether or not the user's age of the user terminal 10 acquired in the client managing system query section 24 is a predetermined age (for example, 20) or more. The user attribute determining section 25 determines to distribute the content that includes the information for predetermined age when the user's age of the user terminal 10 is the predetermine age or more, while determining to distribute the content that does not include the information for the predetermined age when the user's the age of the user terminal 10 is less than the predetermined age.

The content editing section 26 according to Embodiment 2 edits the editable content acquired from the content server 40 according to the determination result by the user attribute determining section 25. More specifically, when the user attribute determining section 25 determines to distribute the content that includes the information for the predetermined age, as shown in FIG. 6(b), the content editing section 26 edits the HTML file so as to distribute the information for the predetermined age (img src="/images/yyyyy_flash.swf") designated by the tag "c". Meanwhile, when the user attribute determining section 25 determines to distribute the content that does not include the information for the predetermined age, as shown in FIG. 6(c), the content editing section 26 edits the HTML file so as not to distribute the information for the predetermined age (img src="/images/yyyyy_swf") designated by the tag "c".

According to the content distribution system 1 according to Embodiment 2, the gateway server 20 is capable of editing the content acquired from the content server 40 based on the user's age of the user terminal 10, and distributing the edited content to the user terminal 10. Therefore, it is possible to optimize the content to be distributed to the user terminal 10 on the network side in accordance with the user's age of the user terminal 10 without increasing the processing load on the content server 40 side. Further, the content server 40 is capable of distributing various contents without concern for user's age of the user terminal 10.

Moreover, according to the content distribution system 1 according to Embodiment 2, the gateway server 20 managed by the telecommunications carrier that is subscribed to by the user terminal 10 edits the content acquired from the content server 40 and distributes the edited content to the user terminal 10. Therefore, it is possible to distribute the optimal content under the initiative of the network side without the outside content provider who manages the content server 40 knowing the user's age involving the privacy of the user terminal 10.

### [Embodiment 3]

Next, Embodiment 3 describes an example where in the content distribution system 1, the gateway server 20 edits the content to distribute to the user terminal 10 based on whether or not a locating area of the user terminal 10 corresponds to a predetermined area, while focusing on the difference from the gateway server 20 in Embodiment 2.

The content acquiring section 22 according to Embodiment 3 acquires content to be edited into content that includes information for a predetermined area targeted for a user locating in the predetermined area and content that does not include the information for the predetermined area.

The user attribute determining section 25 according to Embodiment 3 determines whether or not the locating area of the user terminal 10 acquired in a terminal position managing system (not shown in the figure) corresponds to the predetermined area. When the locating area of the user terminal 10 corresponds to the predetermined area, the user attribute determining section 25 determines to distribute the content that includes the information for the predetermined area, while determining to distribute the content that does not include the information for the predetermined area when the locating area of the user terminal 10 does not correspond to the predetermined area.

In accordance with the determination result in the user attribute determining section 25, as in Embodiment 2, the content editing section 26 according to Embodiment 3 edits the editable content acquired from the content server 40 so as to or not to distribute the information for a predetermined area.

According to the content distribution system 1 according to Embodiment 3, the gateway server 20 is capable of editing the content acquired from the content server 40 based on whether the locating area of the user terminal 10 is a predetermined area, and distributing the edited content to the user terminal 10. Therefore, it is possible to optimize the content to be distributed to the user terminal 10 on the network side in accordance with the locating area of the user terminal 10 without increasing the processing load on the content server 40 side. Further, the content server 40 is capable of distributing various contents without grasping the area of the user terminal 10.

### [Other Embodiments]

The above-mentioned Embodiments describe examples where the client managing system query section 24 of the gateway server 20 inquires about the charging form and user's age of the user terminal 10, but other information on the user attribute managed by the client managing system 30 may be referred to edit the content based on the other user attribute except the charging form and user's age of the user terminal 10. The scope of the invention is defined by the appended claims.

## Claims

1. A relay server (20) comprising:
a content acquiring section configured to acquire content in an editable form from a content server (40), in accordance with a content distribution request from a user terminal (10); and
a content distributing section configured to edit the content acquired by the content acquiring section based on an editing condition of the user terminal (10), and configured to distribute the edited content to the user terminal (10),
**characterized in that** the content in the editable form includes at least one of a plurality of tag areas which respectively designate links to contents for predetermined conditions, and the content distributing section is configured to edit, when a link to content corresponding to the editing condition of the user terminal is included among the links designated by the at least one of the tag areas, the content acquired by the content acquiring section to include the link to content corresponding to the editing condition of the user terminal among the links designated by the at least one of the tag areas.

2. The relay server (20) according to claim 1, wherein the content in the editable form includes a first tag area which designates a link to content for a flat-rate system and a second tag area which designates a link to content for a non-flat-rate system, and
the content distributing section is configured to edit the content acquired by the content acquiring section to include the link designated by the first tag area when a charging form of the user terminal is the flat-rate system, while editing the content acquired by the content acquiring section to include the link designated by the second tag area when the charging form of the user terminal is the non-flat-rate system.

3. The relay server (20) according to claim 2, wherein the content for the flat-rate system is a moving image, and the content for the non-flat-rate system is a still image.

4. The relay server (20) according to claim 1, wherein the content in the editable form includes a tag area which designates a link to information for a predetermined age targeted for a user of the predetermined age or more, and
the content distributing section is configured to edit the content acquired by the content acquiring section to include the link designated by the tag area when a user's age of the user terminal (10) is the predetermined age or more, while editing the content acquired by the content acquiring section not to include the link designated by the tag area when the user's age of the user terminal (10) is less than the predetermined age.

5. The relay server (20) according to claim 1, wherein the content in the editable form includes a tag area which designates a link to information for a predetermined area targeted for a user locating in the predetermined area, and
the content distributing section is configured to edit the content acquired by the content acquiring section to include the link designated by the tag area when a locating area of the user terminal (10) corresponds to the predetermined area, while editing the content acquired by the content acquiring section not to include the link designated by the tag area when the locating area of the user terminal (10) does not correspond to the predetermined area.

6. A content distribution system comprising:
a user terminal (10) configured to perform a content distribution request;
a content server (40) configured to distribute content; and
a relay server (20) as claimed in any one of claims 1 to 5.

7. A content distribution method comprising:
transmitting a content distribution request transmitted from a user terminal (10) to a content server (40);
acquiring content in an editable form from the content server (40), in accordance with the content distribution request from the user terminal (10); and
editing the content acquired by the content acquiring section based on an editing condition of the user terminal (10), and distributing the edited content to the user terminal (10), **characterized in that** the content in the editable form includes at least one of a plurality of tag areas which respectively designate links to contents for predetermined conditions, and the acquired content is edited, when a link to content corresponding to the editing condition of the user terminal is included among the links designated by the at least one of the tag areas, to include the link to content corresponding to the editing condition of the user terminal among the links designated by the at least one of the tag areas.

## Patentansprüche

1. Relaisserver (20) mit:
einem Inhaltserfassungsbereich, der konfiguriert ist, um sich Inhalt in einer editierbaren Form von einem Content Server (40) zu beschaffen, in Übereinstimmung mit einer Inhaltsverteilungsanfrage von einer Benutzerstation (10); und
einem Inhaltsverteilungsbereich. der konfiguriert ist, um den Inhalt zu editieren, der von dem Inhaltserfassungsbereich auf der Grundlage einer Editierbedingung der Benutzerstation (10) erfasst wurde, sowie konfiguriert, um den editierten Inhalt an die Benutzerstation (10) zu verteilen,
**gekennzeichnet dadurch, dass** der Inhalt in der editierbaren Form mindestens einen aus einer Vielzahl von Tag-Bereichen umfasst,
die jeweils Links Inhalten für bestimmte Bedingungen zuordnen, und der Inhaltsverteilungsbereich ist konfiguriert, um dann zu editieren, wenn ein Link zu Inhalt, der der Editierbedingung der Benutzerstation entspricht, in den Links inbegriffen ist, die von dem mindestens einen der Tag-Bereiche zugeordnet werden,
wobei der Inhalt, der von dem Inhaltserfassungsbereich erfasst wird, den Link zu Inhalt umfasst, der der Editierbedingung der Benutzerstation entspricht, unter den Links, die von dem mindestens einen der Tag-Bereiche zugeordnet werden.

2. Relaisserver (20) nach Anspruch 1, wobei der Inhalt in der editierbaren Form einen ersten Tag-Bereich umfasst, der einen Link Inhalt für ein Flat-rate-System zuordnet, und einen zweiten Tag-Bereich, der einen Link Inhalt für ein Nicht-Flat-rate-System zuordnet,
und
wobei der Inhaltsverteilungsbereich konfiguriert ist, um den Inhalt zu editieren, der von dem Inhaltserfassungsbereich mit dem Link erfasst wird, der von dem ersten Tag-Bereich zugeordnet wird, wenn eine Art der Abrechnung der Benutzerstation das Flat-rate-System ist, während er den Inhalt editiert, der von dem Inhaltserfassungsbereich mit dem Link erfasst wird, der von dem zweiten Tag-Bereich zugeordnet wird, wenn die Art der Abrechnung der Benutzerstation das Nicht-Flat-rate-System ist.

3. Relaisserver (20) nach Anspruch 2, wobei der Inhalt für das Flat-rate-System ein Bewegtbild ist und der Inhalt für das Nicht-Flat-rate-System ein Standbild.

4. Relaisserver (20) nach Anspruch 1, wobei der Inhalt in der editierbaren Form einen Tag-Bereich umfasst, der einen Link zu Informationen für ein bestimmtes Alter zuordnet, die auf einen Nutzer in dem bestimmten Alter oder höher abzielen, und
der Inhaltsverteilungsbereich konfiguriert ist, um den Inhalt zu editieren, der von dem Inhaltserfassungsbereich mit dem Link erfasst wurde, der von dem Tag-Bereich zugeordnet wird, wenn das Alter eines Benutzers der Benutzerstation (10) gleich dem bestimmten Alter oder höher ist, während er den Inhalt editiert, der von dem Inhaltserfassungsbereich ohne den Link erfasst wurde, der von dem Tag-Bereich zugeordnet wird, wenn das Alter des Benutzers der Benutzerstation (10) unter dem bestimmten Alter liegt.

5. Relaisserver (20) nach Anspruch 1, wobei der Inhalt in der editierbaren Form einen Tag-Bereich umfasst, der einen Link Informationen für ein bestimmtes Gebiet zuweist, die auf einen Nutzer abzielen, der sich in dem bestimmten Gebiet befindet, und
der Inhaltsverteilungsbereich konfiguriert ist, um den Inhalt zu editieren, der von dem Inhaltserfassungsbereich mit dem Link erfasst wurde, der von dem Tag-Bereich zugeordnet wird, wenn ein Ortsgebiet der Benutzerstation (10) dem vorherbestimmten Gebiet entspricht, während er den Inhalt editiert, der von dem Inhaltserfassungsbereich ohne den Link erfasst wurde, der von dem Tag-Bereich zugeordnet wird, wenn das Ortsgebiet der Benutzerstation (10) nicht dem vorherbestimmten Gebiet entspricht.

6. Inhaltsverteilungssystem mit:
eine Benutzerstation (10), die konfiguriert ist, um eine Inhaltsverteilungsanfrage zu bearbeiten;
einen Content Server (40), der konfiguriert ist, um Inhalt zu verteilen; und
einen Relaisserver (20) nach einem beliebigen der Ansprüche 1 bis 5.

7. Inhaltsverteilungsverfahren mit:
Senden einer Inhaltsverteilungsanfrage von einer Benutzerstation (10) an einen Content Server (40) ;
Erfassung von Inhalt in einer editierbaren Form von dem Content Server (40), in Übereinstimmung mit der Inhaltsverteilungsanfrage der Benutzerstation (10); und
Editieren des Inhalts, der von dem Inhaltserfassungsbereich auf der Grundlage einer Editierbedingung der Benutzerstation (10) erfasst wird, und Verteilen des editierten Inhalts an die Benutzerstation (10), **gekennzeichnet dadurch, dass** der Inhalt in der editierbaren Form mindestens eine Vielzahl von Tag-Bereichen umfasst,
die jeweils Links Inhalt für bestimmte Bedingungen zuordnen, und der erfasste Inhalt wird editiert, wenn ein Link zu Inhalt, der der Editierbedingung der Benutzerstation entspricht, in den Links inbegriffen ist, die von dem mindestens einen der Tag-Bereiche zugeordnet wurden,
mit dem Link zu Inhalt, der den Editierbedingung der Benutzerstation entspricht, unter den Links, die von dem mindestens einen der Tag-Bereiche zugeordnet wurden.

## Revendications

1. Serveur de relais (20) comprenant:
une section d'acquisition de contenu configurée pour acquérir le contenu sous forme éditable à partir d'un serveur de contenu (40), conformément a une demande de distribution de contenu d'un terminal d'utilisateur (10); et
une section de distribution de contenu configurée pour éditer le contenu acquis par la section d'acquisition de contenu en fonction d'une condition d'édition du terminal d'utilisateur (10), et configurée pour distribuer le contenu édité au terminal d'utilisateur (10),
**caractérisé en ce que** le contenu sous forme éditable comprend au moins une d'une pluralité de zones d'étiquette qui désignent respectivement des liens aux contenus pour des conditions prédéterminées, et la section de distribution de contenu est configurée pour éditer, lorsqu'un lien au contenu correspondant à la condition d'édition du terminal d'utilisateur est inclus parmi les liens désignés par l'au moins une des zones d'étiquette, le contenu acquis par la section d'acquisition de contenu pour inclure le lien au contenu correspondant à la condition d'édition du terminal d'utilisateur parmi les liens désignés par l'au moins une des zones d'étiquette.

2. Serveur de relais (20) selon la revendication 1, où le contenu sous forme éditable comprend une première zone d'étiquette désignant un lien au contenu pour un système forfaitaire et une deuxième zone d'étiquette désignant un lien au contenu pour un système non forfaitaire, et
la section de distribution de contenu est configurée pour éditer le contenu acquis par la section d'acquisition de contenu pour inclure le lien désigné par la première zone d'étiquette quand une forme de chargement du terminal d'utilisateur est le système forfaitaire, et éditant le contenu acquis par la section d'acquisition de contenu pour inclure le lien désigné par la deuxième zone d'étiquette quand la forme de chargement du terminal d'utilisateur est le système non forfaitaire.

3. Serveur de relais (20) selon la revendication 2, où le contenu pour le système forfaitaire est une image en mouvement, et le contenu pour le système non forfaitaire est une image fixe.

4. Serveur de relais (20) selon la revendication 1, où le contenu sous forme éditable comprend une zone d'étiquette désignant un lien à des informations pour un âge prédéterminé ciblé pour un utilisateur de l'âge prédéterminé ou supérieur, et
la section de distribution de contenu est configurée pour éditer le contenu acquis par la section d'acquisition de contenu pour inclure le lien désigné par la zone d'étiquette lorsque l'âge d'un utilisateur du terminal d'utilisateur (10) est l'âge prédéterminé ou supérieur, et éditant le contenu acquis par la section d'acquisition de contenu pour ne pas inclure le lien désigné par la zone d'étiquette quand l'âge de l'utilisateur du terminal d'utilisateur (10) est inférieur à l'âge prédéterminé.

5. Serveur de relais (20) selon la revendication 1, où le contenu sous forme éditable comprend une zone d'étiquette désignant un lien à des informations pour une zone prédéterminée ciblée pour une localisation d'utilisateur dans la zone prédéterminée, et
la section de distribution de contenu est configurée pour éditer le contenu acquis par la section d'acquisition de contenu pour inclure le lien désigné par la zone d'étiquette quand une zone de localisation du terminal d'utilisateur (10) correspond à la zone prédéterminée, et éditant le contenu acquis par la section d'acquisition de contenu pour ne pas inclure le lien désigné par la zone d'étiquette quand la zone de localisation du terminal d'utilisateur (10) ne correspond pas à la zone prédéterminée.

6. Système de distribution de contenu comprenant:
un terminal d'utilisateur (10) configuré pour exécuter une demande de distribution de contenu;
un serveur de contenu (40) configuré pour distribuer le contenu; et
un serveur de relais (20) comme revendiqué dans l'une quelconque des revendications 1 à 5.

7. Procédé de distribution de contenu comprenant:
la transmission d'une demande de distribution de contenu transmise à partir d'un terminal d'utilisateur (10) à un serveur de contenu (40);
l'acquisition de contenu sous forme éditable à partir du serveur de contenu (40), conformément à la demande de distribution de contenu à partir du terminal d'utilisateur (10); et
l'édition du contenu acquis par la section d'acquisition de contenu en fonction d'une condition d'édition du terminal d'utilisateur (10), et la distribution du contenu édité au terminal d'utilisateur (10), **caractérisé en ce que** le contenu sous forme éditable comprend au moins une d'une pluralité de zones d'étiquette qui désignent respectivement des liens au contenu pour des conditions prédéterminées, et le contenu acquis est édité, lorsqu'un lien au contenu correspondant à la condition d'édition du terminal d'utilisateur est inclus parmi les liens désignés par l'au moins une des zones d'étiquette, pour inclure le lien au contenu correspondant à la condition d'édition du terminal d'utilisateur parmi les liens désignés par l'au moins une des zones d'étiquette.
